# EUROPEAN PATENT APPLICATION

(11) **EP 1 259 056 A2**
(43) Date of publication of application: **20.11.2002**
(21) Application number: 02010854.4
(22) Date of filing: 15.05.2002
(51) Int. Cl.: H04M 15/00

(54) **Secure billing via Internet**

(30) Priority: 17.05.2001 US 859629
(71) Applicant: ALCATEL, 75008 Paris (FR)
(72) Inventor: Wengrovitz, Michael, Concord, Massachusetts 01742 (US)
(74) Representative: Dreiss, Fuhlendorf, Steimle & Becker

(57) **Abstract**

A system and method for providing call accounting services in a secure, cost-effective manner. A network enterprise includes an intelligent ticket collector (ITC) that retrieves call detail record (CDR) data generated by one or more private branch exchange units. The ITC retrieves the CDR data and transmits it, through encrypted email or other encrypted means, to a service provider over the Internet. The service provider receives, decrypts, and processes the CDR data for generating a call accounting report.

## Description

### FIELD OF THE INVENTION

This invention relates generally to call accounting systems managing the accounting of telephone charges for an enterprise, and more particularly to a call accounting system that provides call accounting services in a secure, cost-effective manner.

### BACKGROUND OF THE INVENTION

Enterprises, typically utilize call accounting services provided by an on-site call accounting system, or by using a call accounting application service provider (ASP), to correctly apportion telephone charges to individual users or departments. The call accounting ASP is typically located at a site remote from a particular enterprise. In typical operation, the call accounting ASP collects, via a dial-up connection, the enterprise call detail record (CDR) data associated with telephone calls made and received at the enterprise. The CDR data is also referred to as ticket data, and includes a calling number, called number, call duration, and other parameters. The call accounting ASP processes the CDR data to produce a usage profile and generate reports, which are then provided to the enterprise customer.

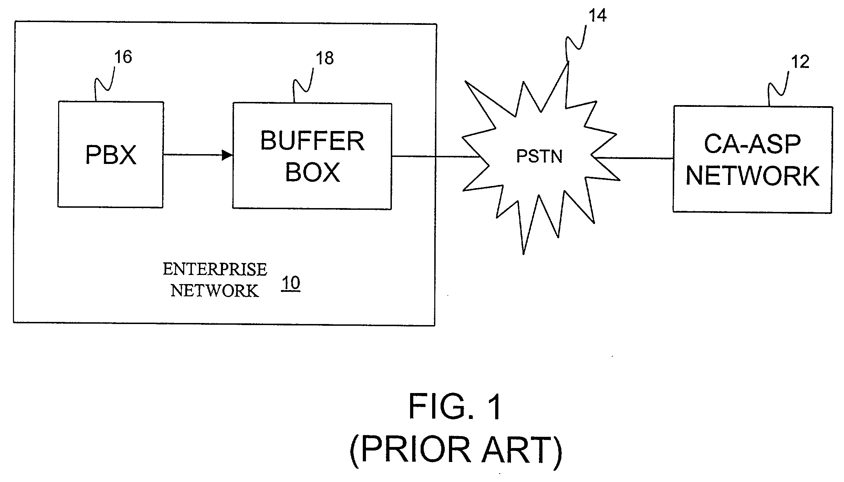

FIG. 1 is a schematic block diagram of a typical system for providing call accounting services. The system includes an enterprise network 10 and a call accounting ASP network 12 coupled to each other over a public switched telephone network (PSTN) 14. The enterprise network 10 includes a private branch exchange unit (PBX) 16 managing incoming and outgoing calls for the enterprise. The PBX generates the CDR or ticket data for each call and stores it in a buffer box 18 at the end of the call. The buffer box is generally a temporary storage device supporting dial-up connections for accessing the buffer box from a remote location. The call accounting ASP periodically initiates a dial-up connection with the buffer box over the PSTN 14, and pulls the CDR data using the dial-up connection.

The call accounting ASP processes the CDR or ticket data to produce a usage profile which may include, for example, a calling number, called number, time of day, trunk, tariff rate, cost of call, and other data associated with a call. The call accounting ASP utilizes the usage profile to generate reports and/or bills which are provided to the enterprise network.

Reliance on dial-up connections over the PSTN 14 to provide call accounting services has resulted in conventional call accounting ASP services operating at relatively low data transfer rates and incurring long distance telephone costs. Accordingly, there is a need for a call accounting ASP service that operates more robustly and in a cost-effective manner, while maintaining adequate security. Adequate security is desirable for transfers of CDR data since an enterprise's call history may be used to deduce private details about a company's business.

### SUMMARY OF THE INVENTION

The present invention is directed to a system and method for providing call accounting services in a secure, cost-effective manner. In accordance to one embodiment of the invention, a system for providing call accounting services includes a first network collecting and encrypting call parameter information. The first network may be, for example, an enterprise network. The system further includes a second network receiving, decrypting, and processing the call parameter information for generating a usage profile. The second network may be, for instance, a call cost accounting ASP network. The call parameter information is transmitted from the first network to the second network over a public computer network, such as, for instance, a public internet.

In accordance to another embodiment of the invention, a method for providing call accounting services includes an intelligent ticket collector retrieving call parameter information from a storage location and encrypting the retrieved call parameter information. The intelligent ticket collector transmits to a service provider the encrypted call parameter information over a public computer network. The service provider receives, decrypts, and processes the call parameter information for generating a usage profile.

It should be appreciated, therefore, that the use of a public computer network for transmitting call parameter information helps substantially reduce the costs and data transfer time associated with PSTN dial-up connections. In addition, security risks associated with data transfers over the public computer network are reduced by encrypting the call parameter information before its transmission.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a typical system in the prior art for providing call accounting services;
FIG. 2 is a schematic block diagram of a system for providing a call accounting ASP service according to one embodiment of the present invention;
FIG. 3 is a more detailed schematic block diagram of an intelligent ticket collector according to one embodiment of the present invention; and
FIG. 4 is a flow diagram of a process for providing call accounting services using the intelligent ticket collector of FIG. 3 according to one embodiment of the invention.

### DETAILED DESCRIPTION

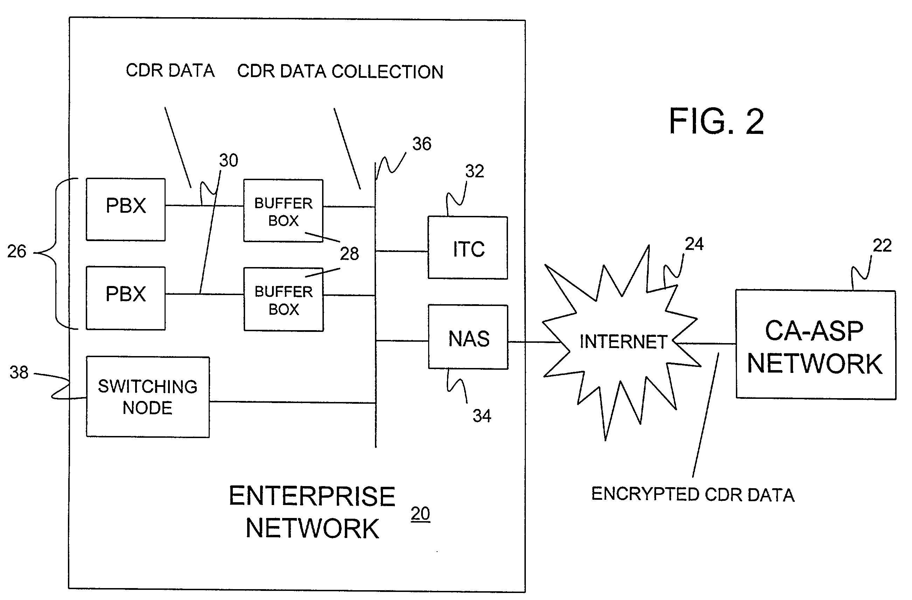

FIG. 2 is a schematic block diagram of a system for providing a call accounting ASP service according to one embodiment of the present invention. The system preferably includes an enterprise network 20 connected to a call accounting ASP network 22 over a public wide area network, such as, for example, a public internet 24. The enterprise network 20 preferably includes one or more private branch exchange (PBX) units (generally referenced at 26) coupled to one or more buffer boxes (generally referenced at 28) via data communication link 30. Buffer boxes 28 are also preferably coupled to an intelligent ticket collector (ITC) 32 and a network access server (NAS) 34 over data communication link 36. Also coupled to the ITC 32 and NAS 34 over data communication link 36 is a switching node38 capable of relaying voice and/or data for the enterprise.

Data communication link 30 is preferably a serial link. Data communication link 36 is preferably a direct internet protocol (IP) link, but may alternatively take the form of a serial link or PSTN connection. PBX units 26 are conventional in the art, and include logic and circuitry for managing incoming and outgoing calls and related data for the enterprise.

The buffer boxes 28 are preferably temporary storage units for storing data received from the PBX units, such as, for example, FIFO buffers or other buffers conventional in the art. Each buffer box preferably includes a serial connection, dial-up connection, and/or direct internet connection for communicating with its associated PBX 26, ITC 32, or NAS 34.

The switching node 38 is preferably a gateway device such as, for example, a router or a bridge, that resides at the edge of the enterprise. The switching node 38 preferably includes one or more internal buffers for storing data associated with incoming and/or outgoing telephone calls.

The ITC 32 is preferably a stand-alone enterprise server running one or more software applications for collecting, encrypting, and transmitting call detail record (CDR) data. CDR data is also referred to as ticket data, and may include a calling number, called number, call duration, and/or other call parameters.

In alternative embodiments, the ITC resides in one or more of the PBX units 26 or within the switching node 38. Electronic mail functionality may also be incorporated into the PBX units 26 or the switching node 38 that includes the ITC 32 for allowing encrypted CDR data to be e-mailed directly to the cost accounting ASP network 22 without invoking the NAS 34. The ITC 32 may also be programmed to provide fraud alerts and other alarm generation conditions, such as, for example, alarms for expensive off-hour or trunk-to-trunk calls, generally rendered by the call accounting ASP.

The NAS 34 is preferably a firewall and electronic mail server for the enterprise network 20. The NAS pushes the encrypted CDR data to the call accounting ASP network via electronic mail or any other IP data transmission method conventional in the art. The NAS 34 also provides corporate firewalls for protecting data transfers within the enterprise network 20.

The call accounting ASP network 22 preferably includes one or more call accounting computers running a conventional call accounting software. The one or more call accounting computers further include a decryption module for decrypting encrypted data received from the enterprise network 20.

In general terms, each PBX unit 26 generates CDR data for calls transmitted by end devices connected to the PBX. Such end devices include telephones, individual personal computers, and the like. Preferably, the CDR data is generated by the PBX unit 26 at the time of the call, and stored in the buffer box 28 when the call is terminated. For calls managed by the switching node 38, the switching node 38 generates the CDR data and stores it in its internal buffer.

The ITC 32 preferably polls the buffer boxes 28 and/or switching node 38 on a periodic basis to collect the stored CDR data. The NAS 34 preferably provides corporate firewalls for protecting the transfer of the CDR data between the buffer boxes/switching node 38 and ITC from external access.

The ITC 32 encrypts the collected CDR data using standard encryption algorithms. The encrypted CDR data is then transmitted to the call accounting ASP network 22 over the internet 24, preferably using the NAS 34. Preferably the encrypted CDR data is transmitted as an electronic mail. However, a person skilled in the art should recognize that any other encrypted data transfer mechanism conventional in the art may be used to transmit the CDR data.

A receiving computer on the call accounting ASP network receives the encrypted data and preferably decrypts it using a private key. The decrypted data is passed to its call accounting software for processing to produce call accounting reports including usage profile information. The usage profile information preferably includes calling numbers, called numbers, telephone trunk information, telephone company tariff rates, call costs, and/or other information associated with the calls. The usage profile preferably identifies the individuals and departments within each division making the calls, allowing the call costs to be correctly apportioned to the appropriate cost centers. The usage profile may also include information about data usage as well as phone usage. For instance, the usage profile may include IP traffic summaries of usage of the Internet by various subnets or individual personal computers.

The call accounting reports may then be transmitted to the enterprise via electronic mail, or made available to enterprise network users on a password-protected server on the internet 24. The enterprise may use the reports to track and correctly apportion call costs to the appropriate individuals or departments.

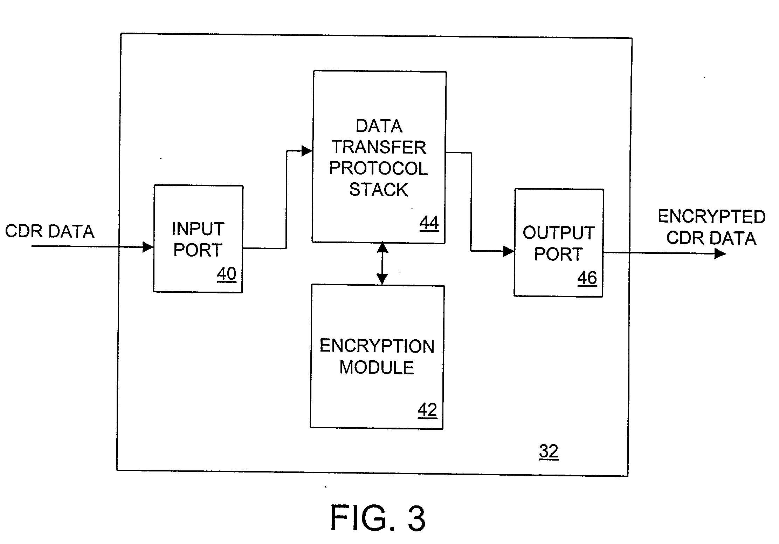

FIG. 3 is a more detailed schematic block diagram of the ITC 32 of FIG. 2 according to one embodiment of the present invention. The ITC preferably includes an input port 40, an encryption module 42, a data transfer protocol stack 44, and an output port 46. The encryption module 42 and data transfer protocol stack 44 are preferably software modules. However, the ITC may be created as a combination of hardware, software, firmware, and/or dedicated hardware unit.

The input port 40 preferably receives CDR data from data communication link 36. The data transfer protocol stack 44 preferably contains a TCP/IP based File Transfer Protocol (FTP) used to collect the CDR data from the PBX units 26. Alternatively, the data transfer protocol stack 44 contains a point-to-point (PPP) protocol for collecting data over the PSTN via a modem connection to the PBX units 26.

The encryption module 42 encrypts the collected CDR data using a public-key cryptography or a secret-key cryptography conventional in the art. For instance, the encryption module 62 may include a script programmed to use public-key cryptography to encrypt the collected CDR data with a public key. Conventional encryption packages such as, for example, PGP (Pretty Good Privacy) may be used for doing the encryption.

The output port 46 receives the encrypted CDR data and transmits it to the call accounting ASP network 22 over the internet 24.

It is understood, of course, that FIG. 3 illustrates a block diagram of the ITC 32 without obfuscating inventive aspects of the present invention with additional elements and/or components that may be required for creating the ITC. These additional elements and/or components, which are not shown in FIG. 3 are well known to those skilled in the art.

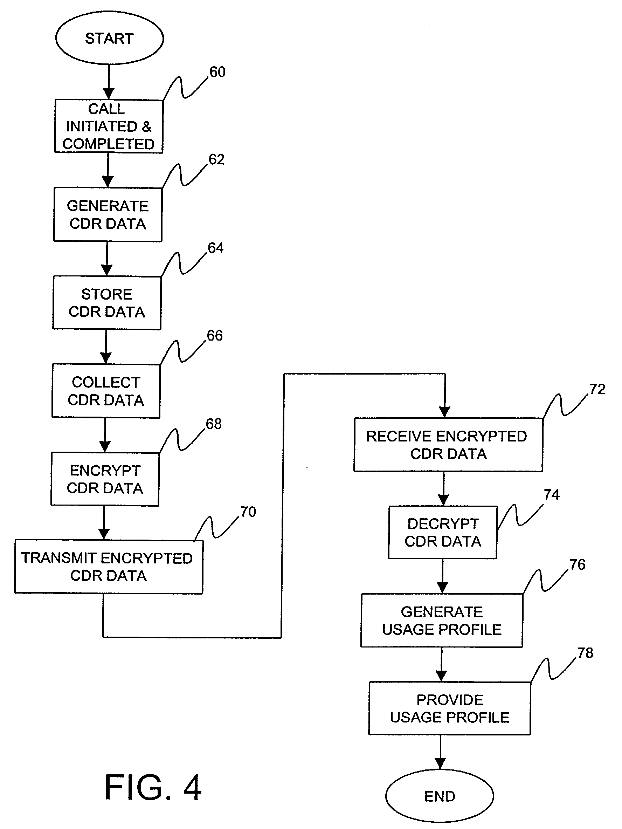

FIG. 4 is a flow diagram of a process for providing call accounting services using the ITC 32 according to one embodiment of the invention. The process starts, and in step 60, a call is initiated and completed through the PBX 26 or switching node 38 by an end device on the enterprise network 20. In step 62, the PBX 62 or switching node 38 generates the CDR data associated with the call according to conventional methods. In step 64, the PBX 26 transmits the CDR data over data communication link 30 to its corresponding buffer box 28 for storage. If the switching node 38 is used, the CDR data is stored in internal buffers within the switching node 38.

In step 66, the ITC 32 collects the CDR data from the PBX 26 and/or switching node 38. If the ITC 32 is located remotely from the PBX 26 or switching node 38, the ITC preferably collects the CDR data via an FTP session over an IP data communication link. Alternatively, the ITC 32 collects the CDR data via a modem connection over the PSTN.

In step 68, the ITC 32 invokes its encryption module 42 to encrypt the collected CDR data according to conventional methods. If public-key encryption is used, the encryption module 42 encrypts the CDR data using a public key and the private key for decrypting the CDR data is made available to the call accounting ASP network 22.

In step 70, the ITC 32 forwards the encrypted CDR data to the NAS 34 which then transmits the data to the call accounting ASP network 22 over the internet 24. Preferably the encrypted CDR data is transmitted in the form of an electronic mail according to conventional methods.

In step 72, the call accounting computer in the call accounting ASP network 22 receives the encrypted CDR data and in step 74, decrypts the data preferably using its private key. In step 76, the call accounting computer generates usage profile data 76 to be included in a call accounting report. In step 78, the call accounting computer provides the usage profile data in the call accounting report to the enterprise network. The usage profile data may be provided via electronic mail or via a web page on a password-protected server on the internet 24.

It should be appreciated, therefore, that the use of the public internet 24 to push the CDR data to the cost accounting ASP network 22 helps reduce the costs and data transfer delays associated with PSTN dial-up connections. Furthermore, the encryption of the CDR data by the ITC 32 provides security in using the relatively unsafe internet for the data transfer.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A system for providing call accounting services, the system comprising:
a first network collecting and encrypting call parameter information; and
a second network receiving, decrypting, and processing the call parameter information for generating a usage profile;
wherein the call parameter information is transmitted from the first network to the second network over a public computer network.

2. The system of claim 1, wherein the first network is an enterprise network.

3. The system of claim 1, wherein the first network includes:
a private branch exchange unit for generating the call parameter information;
a storage device for storing the call parameter information; and
an encrypter for encrypting the call parameter information.

4. The system of claim 1, wherein the second network is a service provider network.

5. The system of claim 1, wherein the public computer network is a public internet.

6. The system of claim 1, wherein the encrypted call parameter information is transmitted via electronic mail.

7. The system of claim 1, wherein the usage profile includes call cost information.

8. An intelligent ticket collector comprising:
an input for receiving call parameter information;
an encrypter for encrypting the call parameter information; and
an output for transmitting to a call accounting service provider the encrypted call parameter information via public computer network, wherein the call accounting service provider receives, decrypts, and processes the call parameter information for generating a usage profile.

9. The intelligent ticket collector of claim 8,
wherein the public computer network is a public internet.

10. The intelligent ticket collector of claim 8,
wherein the encrypted call parameter information is transmitted via electronic mail.

11. The intelligent ticket collector of claim 8,
wherein the usage profile includes call cost information.

12. A method for providing call accounting services for an enterprise, the method comprising the steps of:
retrieving call parameter information from a storage location;
encrypting the retrieved call parameter information; and
transmitting to a call accounting service provider the encrypted call parameter information via a public computer network, wherein the call accounting service provider receives, decrypts, and processes the call parameter information for generating a usage profile.

13. The method of claim 12, wherein the public computer network is a public internet.

14. The method of claim 12, wherein the encrypted call parameter information is transmitted via electronic mail.

15. The method of claim 12, wherein the usage profile includes call cost information.
